# EUROPÄISCHE PATENTSCHRIFT

(11) **EP 3 246 141 B1**
(45) Veröffentlichungstag und Bekanntmachung des Hinweises auf die Patenterteilung: **17.11.2021**
(21) Anmeldenummer: 17167912.9
(22) Anmeldetag: 25.04.2017
(51) Int. Cl.: B27B 5/29, B23D 47/00

(54) **WERKZEUGMASCHINE; INSBESONDERE KAPPSÄGE**
MACHINE TOOL, IN PARTICULAR MITRE SAW
MACHINE-OUTIL, EN PARTICULIER SCIE PIVOTANTE

(30) Priorität: 20.05.2016 DE 102016109375
(43) Veröffentlichungstag der Anmeldung: 22.11.2017
(73) Patentinhaber: Festool GmbH, 73240 Wendlingen am Neckar (DE)
(72) Erfinder: Eisenmann, Philipp, 72669 Unterensingen (DE); WERBACH, Martin, 89264 Oberhausen (DE)
(74) Vertreter: Patentanwälte Bregenzer und Reule Partnerschaftsgesellschaft mbB

(56) Entgegenhaltungen:
- DE-A1- 4 322 672
- DE-U1-202008 001 745
- US-A1- 2009 205 474
- US-A1- 2013 160 628

## Beschreibung

Die Erfindung betrifft eine Werkzeugmaschine, insbesondere eine Säge oder eine Kappsäge, zur trennenden Bearbeitung eines Werkstücks mit einer Antriebsbaugruppe, gemäß dem Oberbegriff des Anspruchs 1.

Eine Werkzeugmaschine in Gestalt einer Kappsäge gemäß dem Oberbegriff des Anspruchs 1 ist beispielsweise in DE 43 22 672 A1 erläutert.

Eine aus DE 10 2006 059 751 A1 bekannte Werkzeugmaschine verfolgt ein an sich komfortables Betätigungskonzept, bei dem der Bediener eine Rast-Betätigungseinrichtung in einer Rastfreigabestellung mit einer Hand halten kann, sodass er mit derselben Hand eine Klemmeinrichtung betätigen kann, um das Schwenkteil bezüglich der Schwenkbasis zu verklemmen.

Allerdings ist die Bedienung in manchen Fällen unhandlich, insbesondere dann, wenn die Federanordnung eine hohe Kraft aufweist, gegen die der Bediener sozusagen gegen halten muss.

Es ist daher die Aufgabe der vorliegenden Erfindung, eine leichter bedienbare Werkzeugmaschine bereitzustellen.

Zur Lösung der Aufgabe ist eine Werkzeugmaschine gemäß der technischen Lehre des Anspruchs 1 vorgesehen.

Es ist dabei ein Grundgedanke, dass die Verrastung der Rasteinrichtung sozusagen deaktivierbar ist, indem das Betätigungselement mit dem Blockier-Bewegungsfreiheitsgrad betätigt wird. Das an sich schon zur Betätigung der Rasteinrichtung geeignete Betätigungselement kann gleichzeitig dazu genutzt werden, die Verrastung zu verhindern oder zu blockieren. Der Bediener kann mit demselben Bedienelement, mit dem er die Verrastung aufheben kann, auch eine Verrastung blockieren. Ein Umgreifen oder Betätigen eines anderen, vom Betätigungselement verschiedenen Blockierelements zur Blockierung der Verrastung, beispielsweise eines Schiebers oder dergleichen, der das Rastelement oder das Betätigungselement ortsfest hält, kann vermieden werden. Das Betätigungselement bleibt ohne Krafteinwirkung des Bedieners in der Rastblockierstellung.

Die Werkzeugmaschine ist zweckmäßigerweise eine mobile, jedoch stationär einsetzbare Werkzeugmaschine. Insbesondere ist es vorteilhaft, wenn die Werkzeugmaschine zwar transportierbar ist, d.h. ein Gewicht von weniger als 60-80 kg aufweist, für einen Sägebetrieb aber auf einem Untergrund abgestellt werden kann. Das Werkstück wird zweckmäßigerweise bezüglich der Werkzeugmaschine ortsfest gehalten, während der Trennschnitt oder Sägeschnitt durchgeführt wird.

Die Erfindung eignet sich prinzipiell aber auch für Werkzeugmaschinen, die beispielsweise am Werkstück entlang bewegt werden. Möglich wäre beispielsweise die Anwendung bei einer Verrastung eines Gehrungslagers, mit dem die Antriebsbaugruppe oder Sägebaugruppe relativ zu einer Führungsbasis, insbesondere einem sogenannten Sägetisch, schwenkbar ist, wobei das Gehrungslager eine Verrastung der Sägebaugruppe oder Antriebsbaugruppe in einer oder mehreren Schrägstellwinkeln relativ zu Führungsbasis bereitstellt.

Das Trennwerkzeug ist vorzugsweise ein Sägeblatt oder umfasst ein Sägeblatt. Das Trennwerkzeug kann aber auch eine Trennscheibe umfassen oder sein.

Der Antriebsmotor ist zweckmäßigerweise ein elektrischer Antriebsmotor.

Der Antriebsmotor ist vorteilhaft zu einem Drehantreiben der Werkzeugaufnahme und somit des Trennwerkzeugs vorgesehen. Es ist auch möglich, dass ein Getriebe zwischen Antriebsmotor und Werkzeugaufnahme vorgesehen ist, beispielsweise zu einer Drehzahlveränderung und/oder in Gestalt eines Winkelgetriebes und/oder zur Erzeugung einer oszillierenden Bewegung des Trennwerkzeugs.

Insbesondere bei der stationär auf einem Untergrund abzustellenden Werkzeugmaschine sind die nachfolgenden Maßnahmen zweckmäßig:
Vorteilhaft ist vorgesehen, dass die Schwenkbasis als eine auf einem Untergrund abstellbare Maschinenbasis ausgestaltet ist, beispielsweise als ein Maschinenbett. An der Maschinenbasis ist das Schwenkteil schwenkbar gelagert. Es ist auch möglich, dass das Schwenkteil auf der Maschinenbasis oder Schwenkbasis aufliegt. Bevorzugt ist die Schwenkachse, um die das Schwenkteil bezüglich der Maschinenbasis schwenkbar gelagert ist, eine bei Gebrauch vertikale Schwenkachse.

Zweckmäßigerweise stellt das Schwenkteil und/oder die Schwenkbasis eine Auflagefläche und/oder Anlagefläche für das Werkstück bereit. Die Schwenkbasis kann beispielsweise eine Auflagefläche und/oder Anlagefläche des Schwenkteils vergrößern. Es ist weiterhin vorteilhaft, wenn ein an der Schwenkbasis festgelegter oder festlegbarer Anlagekörper zur Anlage des Werkstücks zum Schwenkteil vorsteht, insbesondere einen Anlageabschnitt für das Werkstück oberhalb oder neben einer Auflagefläche des Schwenkteils aufweist.

Es ist vorteilhaft, wenn die Antriebsbaugruppe oberhalb der Schwenkbasis bei Gebrauch angeordnet ist.

Weiterhin ist es zweckmäßig, wenn das Schwenkteil oder die Schwenkbasis eine Tragbasis für die Antriebsbaugruppe bereitstellt.

Bevorzugt ist die Antriebsbaugruppe an einem Träger, der vor das Schwenkteil oder die Schwenkbasis vorsteht, gehalten. An diesem Träger kann beispielsweise eine Linearführung für die Antriebsbaugruppe vorgesehen sein. Bevorzugt ist der Träger relativ zur Schwenkbasis oder relativ zum Schwenkteil schräg-schwenkbar.

Vorteilhaft ist die Werkzeugaufnahme, insbesondere die Antriebsbaugruppe als Ganzes, um eine Kapp-Schwenkachse anhand eines Kapp-Schwenklagers zu einer Auflagefläche für das Werkstück hin und von der Auflagefläche weg schwenkbar. Die Kapp-Schwenkachse verläuft bei Gebrauch der Werkzeugmaschine vorzugsweise horizontal. Die Werkzeugmaschine kann dann z.B. eine Kappsäge sein.

Ein vorteilhaftes Konzept, insbesondere bei einer Ausgestaltung der Werkzeugmaschine als Zugsäge oder als Kapp-Zug-Säge sieht vor, dass die Antriebsbaugruppe bezüglich der Schwenkbasis an einer Linearführung zur Durchführung von Längsschnitten mit dem Trennwerkzeug entlang einer Längsachse linear gelagert ist. Die Linearführung umfasst beispielsweise mindestens einen langgestreckten Führungskörper, insbesondere eine Führungsstange oder einen Führungsstab, welcher sich entlang der Längsachse erstreckt. Der mindestens eine langgestreckte Führungskörper, insbesondere die Führungsstange oder der Führungsstab, kann relativ zu der Schwenkbasis oder dem Schwenkteil beweglich sein. Beispielsweise ist dann an der Schwenkbasis oder dem Schwenkteil, insbesondere an einem turmartigen Träger, eine Lageraufnahme für den mindestens einen langgestreckten Führungskörper vorgesehen sein. Es ist auch möglich, dass der langgestreckte Führungskörper ortsfest an der Schwenkbasis oder dem Schwenkteil angeordnet ist. Insbesondere ist es bevorzugt, wenn die Antriebsbaugruppe in der Art eines Schlittens relativ zu der Schwenkbasis oder dem Schwenkteil, insbesondere an einem Träger, der vor die Schwenkbasis oder das Schwenkteil vorsteht, linear beweglich gelagert ist. An dem Schlitten ist zweckmäßigerweise das Kapp-Schwenklager vorgesehen.

Bevorzugt ist es, wenn die Antriebsbaugruppe bezüglich der Schwenkbasis um eine Schräg-Schwenkachse rechtwinkelig anhand eines Schräg-Schwenklagers quer zu der Schwenkachse des Schwenkteils bezüglich der Schwenkbasis schwenkbar gelagert ist. Somit können beispielsweise Gehrungsschnitte oder Schrägschnitte in das Werkstück durchgeführt werden.

Eine Kombination beider vorgenannter Maßnahmen sieht vor, dass die Antriebsbaugruppe einerseits linear beweglich und andererseits schrägschwenkbar bezüglich der Schwenkbasis oder des Schwenkteils gelagert ist. Es ist vorteilhaft, dass ein Träger für die Antriebsbaugruppe anhand des Schrägstelllagers bezüglich der Schwenkbasis oder des Schwenkteils um eine Schrägschwenkachse schwenkbar ist und an dem Träger die Linearführung für die Antriebsbaugruppe vorgesehen ist. Beispielsweise steht der mindestens eine lang gestreckte oder stangenartige Führungskörper vor den Träger vor und erstreckt sich insbesondere oberhalb einer Auflagefläche für das Werkstück.

Erfindungsgemäß ist vorgesehen, dass der Rast-Bewegungsfreiheitsgrad eine Schwenkbarkeit des Betätigungselements um eine Schwenkachse umfasst oder dadurch gebildet ist, wobei diese Schwenkachse eine Entrast-Schwenkachse bildet. Die Bezeichnung Entrast-Schwenkachse soll in der Beschreibung und den Ansprüchen eine Unterscheidung von anderen Schwenkachsen erleichtern. Eine einfache Schwenkbewegung des Betätigungselements genügt zur Verstellung des Rastelements in Eingriff oder außer Eingriff mit der Rastgegenkontur. Es sei aber bemerkt, dass auch eine lineare Beweglichkeit zur Verstellung des Rastelements außer Eingriff mit der mindestens einen Rastgegenkontur vorgesehen sein kann. Schließlich ist auch eine überlagerte Beweglichkeit, d.h. linear und schwenkbar, des Betätigungselements zur Verstellung des Rastelements prinzipiell möglich.

In Bezug auf den Blockier-Bewegungsfreiheitsgrad sind ebenfalls mehrere Möglichkeiten gegeben. Erfindungsgemäß ist vorgesehen, dass der Blockier-Bewegungsfreiheitsgrad eine Schwenkbarkeit des Betätigungselements um eine Blockier-Schwenkachse. Es kann vorgesehen sein, dass der Blockier-Bewegungsfreiheitsgrad eine Verschieblichkeit des Betätigungselements um eine Blockier-Schiebeachse umfasst oder dadurch gebildet ist. Die Blockier-Schwenkachse ist von der Schwenkachse des Rast-Bewegungsfreiheitsgrads verschieden. Die Blockier-Schwenkachse ist zweckmäßigerweise auch von einer Schiebeachse des Rast-Bewegungsfreiheitsgrads verschieden, wobei durchaus die Möglichkeit besteht, dass diese beiden Achsen dieselben sind, d.h. dass das Betätigungselement zum Blockieren um die Schiebeachse des Rast-Bewegungsfreiheitsgrads schwenkt. Vorteilhaft ist es weiterhin, wenn die Blockier-Schiebeachse von einer Schiebeachse und/oder von einer Schwenkachse des Rast-Bewegungsfreiheitsgrads verschieden ist. Auch hier gilt, dass das Betätigungselement zum Blockieren der Verrastung entlang der Schwenkachse des Rast-Bewegungsfreiheitsgrads verschieblich gelagert sein kann.

Erfindungsgemäß ist vorgesehen, dass die Entrast-Schwenkachse und die Blockier-Schwenkachse zueinander winkelig sind, insbesondere etwa rechtwinkelig. So kann beispielsweise in Gebrauchslage der Werkzeugmaschine vorgesehen sein, dass die Entrast-Schwenkachse horizontal verläuft, die Blockier-Schwenkachse hingegen vertikal oder etwa vertikal, beispielsweise schräg zur Vertikalen in einem Winkel von beispielsweise 0-20° orientiert sein.

Eine Variante der Erfindung kann vorsehen, dass das Rastelement durch das Betätigungselement in die Rastblockierstellung gebracht wird, beispielsweise verschoben wird oder verschwenkt wird, sodass es mit einer Stützkontur in Eingriff ist oder durch die Stützkontur abgestützt ist und somit durch die Federanordnung nicht mehr in Eingriff mit der mindestens einen Rastgegenkontur gebracht werden kann. Die Stützkontur wirkt der Federanordnung entgegen.

Bevorzugt ist vorgesehen, dass wie beim in der Zeichnung dargestellten Beispiel das Betätigungselement das Rastelement in der Rastblockierstellung hält. Somit ist also das Rastelement direkt oder indirekt durch das Betätigungselement gegenüber einer Verrastung mit der mindestens einen Rastgegenkontur blockiert.

Das Betätigungselement und/oder das Rastelement sind zweckmäßigerweise in der Rastblockierstellung an mindestens einer Stützkontur abgestützt. Die Stützkontur kann beispielsweise einen Stützvorsprung, eine Stützstufe oder dergleichen umfassen. Die mindestens eine Stützkontur kann aber auch an dem Betätigungselement-Lager vorgesehen sein oder eine dort vorgesehene Stützkontur umfassen. Weiterhin ist es vorteilhaft, wenn die mindestens eine Stützkontur unmittelbar an dem Rastelement vorgesehen ist oder dort eine Stützkontur umfasst. Somit kann das Betätigungselement beispielsweise nahe bei dem Rastelement durch eine einzige Stützkontur oder mindestens eine Stützkontur abgestützt sein, was günstige Verhältnisse hinsichtlich der Hebelkraft darstellt. Weiterhin ist es möglich, dass eine Stützkontur an einem freien Endbereich der Federanordnung für das Rastelement vorgesehen ist. Der freie Endbereich der Federanordnung und das Rastelement können sozusagen identisch sein, weil nämlich insbesondere vorgesehen ist, dass das Rastelement am freien Endbereich der Federanordnung vorgesehen ist.

Ein bevorzugtes Konzept sieht vor, dass das Betätigungselement in eine vor dem Blockier-Bewegungsfreiheitsgrad vorrangige Beweglichkeit mit dem Rast-Bewegungsfreiheitsgrad belastet und/oder verrastet ist. Mithin ist also vorgesehen, dass das Betätigungselement an sich und vorrangig mit dem Rast-Bewegungsfreiheitsgrad beweglich ist, der Blockier-Bewegungsfreiheitsgrad sozusagen nachrangig ist. Durch die Federbelastung oder Verrastung wird die Rastbeweglichkeit sozusagen vorrangig eingestellt. Zum vorgenannten Zweck kann beispielsweise eine Aufnahmekontur an dem Betätigungselement-Lager dienen. Die Aufnahmekontur kann beispielsweise eine Lageraufnahme für ein Achselement darstellen. Es ist aber auch möglich, dass beispielsweise eine Stufe oder eine sonstige Kontur vorgesehen ist, die dafür sorgt, dass das Betätigungselement vorrangig den Rast-Bewegungsfreiheitsgrad aufweist. Weiterhin ist es vorteilhaft, wenn beispielsweise eine Federanordnung dafür sorgt, dass das Betätigungselement vorrangig den Rast-Bewegungsfreiheitsgrad einnimmt. Die Federanordnung kann eine von der das Rastelement betätigenden Federanordnung separate Federanordnung sein. Bevorzugt handelt es sich aber bei der Federanordnung um diejenige, die auch das Rastelement in Richtung der Raststellung belastet.

Eine vorteilhafte Ausgestaltung der Erfindung sieht vor, dass das Betätigungselement-Lager mindestens eine Lageraufnahme aufweist, in welchem ein Achselement zu einer Schwenkbarkeit des Betätigungselements um eine Entrast-Schwenkachse schwenkbar gelagert ist. Das Achselement ist zur Bereitstellung des Blockier-Bewegungsfreiheitsgrads aus der Lageraufnahme, beispielsweise anhand einer Schwenkbewegung oder einer Schiebebewegung, herausbewegbar. Somit kann beispielsweise die Lageraufnahme neben einer Stützkontur vorgesehen sein, an der das Betätigungselement in der Rastblockierstellung abgestützt ist. Kinematisch sind beide Varianten möglich, nämlich dass beispielsweise das Achselement am Betätigungselement angeordnet und in der Lageraufnahme aufgenommen ist. Es ist aber auch möglich, dass die Lageraufnahme am Betätigungselement angeordnet ist und an einem ortsfesten Achselement drehbar gelagert ist.

Ein bevorzugtes Konzept sieht vor, dass das Betätigungselement durch eine Federanordnung, beispielsweise die Federanordnung des Rastelements oder eine von der Federanordnung des Rastelements separate Federanordnung, in die mindestens eine Lageraufnahme hinein belastet ist. Somit sorgt die Federanordnung vorteilhaft dafür, dass das Betätigungselement mechanisch vorrangig mit dem Rast-Bewegungsfreiheitsgrad beweglich ist.

Es ist ferner vorteilhaft, wenn das Betätigungselement an einander entgegengesetzten Seiten mit einer Paarung aus Lageraufnahme und Achselement des Betätigungselement-Lagers um die Entrast-Schwenkachse schwenkbar gelagert ist. Beispielsweise stehen Achsvorsprünge seitlich vor das Betätigungselement vor und sind in den Lageraufnahmen gelagert.

Prinzipiell möglich ist es, dass beide vorgenannten Paarungen aus Lageraufnahme und Achselement eine Beweglichkeit des Betätigungselements mit dem Blockier-Bewegungsfreiheitsgrad zulassen. Zum Beispiel können die Achselemente aus den Lageraufnahmen herausschwenken oder herausgeschoben werden. Eine zweckmäßige Ausgestaltung sieht jedoch vor, dass das Betätigungselement an einander entgegengesetzten Seiten mit einer Paarung aus Lageraufnahme und Achselement des Betätigungselement-Lagers um die Entrast-Schwenkachse schwenkbar gelagert ist, wobei das Achselement nur einer Paarung aus Lageraufnahme und Achselement aus seiner Lageraufnahme herausbewegbar ist. Die andere Paarung aus Lageraufnahme und Achselement ermöglicht zwar die Querbewegung oder Schwenkbewegung oder Schiebebewegung des Betätigungselements quer zu der Entrast-Schwenkachse. Zweckmäßigerweise bildet oder umfasst also eine Paarung aus Lageraufnahme und Achselement ein Schwenklager für die bereits erwähnte Blockier-Schwenkachse.

Zweckmäßigerweise ist das Betätigungselement ein Betätigungshebel oder ein Betätigungsschieber oder umfasst einen Betätigungsschieber oder einen Betätigungshebel.

Bevorzugt ist es, wenn das Betätigungselement eine stabförmige oder stangenartige Gestalt aufweist.

Vorteilhaft ist es, wenn das Betätigungselement an einem von der Schwenkbasis oder dem Schwenkteil oder beiden abstehenden Arm angeordnet ist. Der Arm kann beispielsweise als ein Betätigungshebel zum Verschwenken des Schwenkteils bezüglich der Schwenkbasis dienen. Bevorzugt hat der Arm einen Schlitz für das Trennwerkzeug.

Die Federanordnung umfasst zweckmäßigerweise eine Blattfeder oder ein plattenartiges Federelement oder einen plattenartigen Federkörper oder ist dadurch gebildet.

Die Federanordnung weist zweckmäßigerweise das Rastelement integral auf oder bildet das Rastelement. Die Federanordnung kann in einem einfachen Fall beispielsweise ein elastischer Körper sein, der mit der mindestens einen Rastgegenkontur verrasten kann. Es ist auch möglich, dass die Federanordnung beispielsweise eine Schraubenfeder oder Spiralfeder umfasst. Weiterhin kann das Rastelement beispielsweise als eine Federzunge ausgestaltet sein, also integral sozusagen die Federanordnung umfassen.

Bevorzugt ist es, wenn die Federanordnung das Betätigungselement zu dem Betätigungselement-Lager hin belastet.

Eine vorteilhafte Ausgestaltung sieht vor, dass beispielsweise mindestens ein Federarm der Federanordnung das Betätigungselement, beispielsweise dessen Achselement oder Lageraufnahme, in Richtung des Betätigungselement-Lagers belastet. So kann zum Beispiel vorgesehen sein, dass ein Achselement des Betätigungselements in Richtung einer Lageraufnahme des Betätigungselement-Lagers betätigt wird und/oder in die Lageraufnahme gedrückt wird und/oder in der Lageraufnahme gehalten wird. Bevorzugt ist eine Konfiguration, bei der Federarme, die einen Abstand zueinander haben, insbesondere gabelartig ausgestaltet sind oder Gabelarme darstellen, jeweils auf ein Achselement wirken und dies in der jeweiligen Lageraufnahme halten. Die Lageraufnahme ist zweckmäßigerweise an dem bereits erläuterten Arm angeordnet, der vor die Schwenkbasis oder das Schwenkteil vorsteht.

Die Federanordnung weist zweckmäßigerweise ein Federelement oder einen Federkörper, insbesondere in der Art eines Stanzteils oder Biegeteils, auf, welches oder welcher mit einander entgegengesetzten Endbereichen einerseits auf das Betätigungselement in Richtung des Betätigungselement-Lagers und andererseits auf das Rastelement einwirkt oder an diesem Endbereich das Rastelement aufweist. Beispielweise sind an dem erstgenannten Endbereich einer oder mehrere Federarme vorgesehen, die jeweils ein Achselement in eine Lageraufnahme drücken.

Ein zweckmäßiges ergonomisches Bedienungskonzept kann beispielsweise wie folgt aussehen:
Vorteilhaft ist vorgesehen, dass das Betätigungselement neben oder unterhalb einer Klemm-Betätigungshandhabe, beispielsweise einem Handknauf, einem Knebel oder dergleichen, einer Klemmeinrichtung zum Verklemmen des Schwenkteils relativ zu der Schwenkbasis angeordnet ist. Beispielsweise ist das Betätigungselement in der Art einer Halbschale oder halben Hülse ausgestaltet und erstreckt sich entlang eines Spannarms oder Klemmarms der Klemmeinrichtung. Bevorzugt ist es insbesondere, wenn die Klemm-Betätigungshandhabe und das Betätigungselement mit einer Hand bedienbar sind. Ein vorteilhaftes Konzept sieht vor, dass die Klemm-Betätigungshandhabe, zum Beispiel der Drehknauf, mit einem Handballen oder einer Handinnenfläche betätigbar ist, während ein Betätigungsabschnitt des Betätigungselements mit einem oder mehreren Fingern ergreifbar ist. Insbesondere ist es vorteilhaft, wenn das Betätigungselement zum Verstellen des Rastelements aus der Verrastung mit der mindestens einen Rastgegenkontur zu der Klemm-Betätigungshandhabe hin verschwenkbar ist.

Eine zweckmäßige Ausgestaltung sieht vor, dass die mindestens eine Rastgegenkontur an der Schwenkbasis und das Rastelement oder das Betätigungselement oder beide an dem Schwenkteil angeordnet sind. Somit ist also die mindestens eine Rastgegenkontur ortsfest an der Schwenkbasis, während am beweglichen Schwenkteil die Betätigungselemente oder beweglichen Elemente der Rasteinrichtung vorgesehen sind. Es ist allerdings auch denkbar, dass beispielsweise das Rastelement an der Schwenkbasis und die Rastgegenkontur an dem Schwenkteil angeordnet sind. In diesem Fall ist beides möglich, dass das Betätigungselement am Schwenkteil oder an der Schwenkbasis angeordnet ist. Vorteilhaft ist es jedenfalls, wenn die beweglichen Teile (Rastelement und Betätigungselement) an demselben Bauteil vorgesehen sind.

Das Rastelement weist eine zu der mindestens einen Rastgegenkontur passende Rastkontur auf oder ist dadurch gebildet. Beispielsweise umfasst die Rastkontur mindestens einen Rastvorsprung und die mindestens eine Rastgegenkontur mindestens eine Rastaufnahme oder umgekehrt die mindestens eine Rastgegenkontur mindestens einen Rastvorsprung und die Rastkontur mindestens eine Rastaufnahme.

Die mindestens eine Rastgegenkontur bildet zweckmäßigerweise einen Bestandteil einer Anordnung mehrerer Rastgegenkonturen für das Rastelement, die bogenförmig um die Schwenkachse des Schwenkteils bezüglich der Schwenkbasis angeordnet sind. Somit kann das Rastelement sozusagen um die Schwenkachse schwenken und findet an mindestens zwei Winkelpositionen eine Rastgegenkontur vor.

Ein zweckmäßiges Konzept sieht vor, dass eine Klemmkontur, beispielsweise ein Widerlagerbereich, ebenfalls bogenförmig um die Schwenkachse um die das Schwenkteil bezüglich der Schwenkbasis schwenkt, verläuft. Weiterhin ist es zweckmäßig, wenn eine Klemmkontur der Klemmeinrichtung abseits der mindestens einen Rastgegenkontur oder eine Anordnung von mehreren Rastgegenkonturen vorgesehen ist. Somit sind die jeweiligen Funktionen Klemmen und Rasten funktional und mechanisch voneinander getrennt.

Nachfolgend wird ein Ausführungsbeispiel der Erfindung anhand der Zeichnung erläutert. Es zeigen:

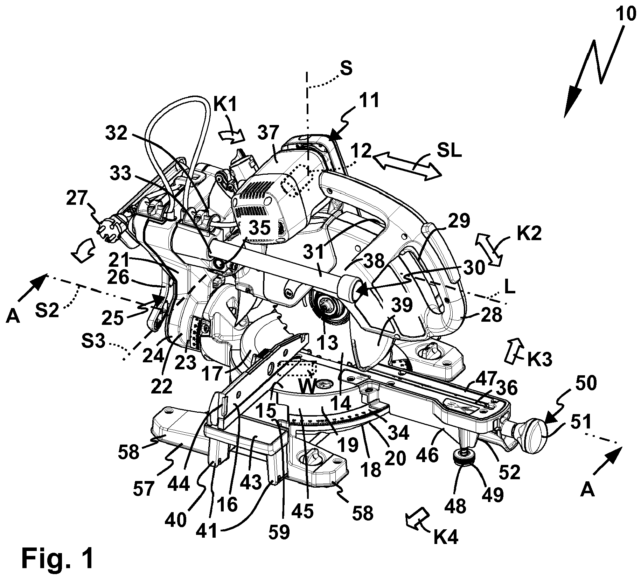

- Figur 1: eine perspektivische Schrägansicht einer Werkzeugmaschine in Gestalt einer Zug-Kappsäge,
- Figur 2: eine Schnittdarstellung durch eine Schwenkbasis und ein Schwenkteil mit einer Rasteinrichtung und einer Klemmeinrichtung der Werkzeugmaschine gemäß Figur 1 in einer Raststellung, etwa entlang einer Schnittlinie A-A in Figur 1,
- Figur 3: einen Ausschnitt D1 der Schnittdarstellung entsprechend Figur 2, jedoch mit der Rasteinrichtung in einer Lösestellung,
- Figur 4: eine Ansicht der Werkzeugmaschine von schräg unten,
- Figur 5: ein Detail D2 aus Figur 4 mit einem Betätigungselement in einer Rastfreigabestellung,
- Figur 6: das Detail gemäß Figur 5, jedoch mit dem Betätigungselement in einer Rastblockierstellung,
- Figur 7: eine Schnittdarstellung durch ein Betätigungselement-Lager, etwa entsprechend einem Ausschnitt D3 in Figur 5 entlang einer Schnittlinie B-B (also in einer etwa horizontalen Schnittebene), und
- Figur 8: eine weitere Schnittdarstellung durch das Betätigungselement-Lager entsprechend dem Ausschnitt D3 in Figur 5, jedoch entlang einer Schnittlinie C-C (also in einer etwa vertikalen Schnittebene).

Eine Werkzeugmaschine 10 ist z.B. als eine Kappsäge ausgestaltet. Eine Antriebsbaugruppe 11 der Werkzeugmaschine 10 umfasst einen Antriebsmotor 12, welcher direkt oder über ein nicht dargestelltes Getriebe eine Werkzeugaufnahme 13 antreibt, an der ein Trennwerkzeug 14, beispielsweise ein Sägeblatt, lösbar anordenbar ist. Der Antriebsmotor 12 ist ein elektrischer Antriebsmotor, insbesondere ein bürstenloser Antriebsmotor.

Die Antriebsbaugruppe 11 ist oberhalb einer Auflagefläche 15 zum Auflegen eines Werkstücks W angeordnet. Das Werkstück W kann auf die Auflagefläche 15 aufgelegt und an eine Anlagefläche 16 angelegt werden, um einen Trennschnitt anhand des Trennwerkzeugs 14 durchzuführen.

Die Auflagefläche 15 ist an einem Schwenkteil 17 vorgesehen, welches relativ zu einer Schwenkbasis 18 um die Schwenkachse S schwenkbar ist. Die Schwenkbasis 18 bildet eine Maschinenbasis 20.

Eine Winkelstellung der Werkzeugaufnahme 13 und somit des Trennwerkzeugs 14 relativ zu der Anlagefläche 16 ist durch eine Verschwenkung der Antriebsbaugruppe 11 um eine Schwenkachse S verstellbar, so dass Trennschnitte in unterschiedlichen Winkeln, insbesondere Gehrungswinkeln, in das Werkstück W eingebracht werden können.

Die Antriebsbaugruppe 11 ist an einem Träger 21 gehalten, welcher in der Gebrauchslage nach oben vor das Schwenkteil 17 vorsteht.

Der Träger 21 ist mit dem Schwenkteil 17 verbunden. Eine Variante kann vorsehen, dass der Träger 21 unbeweglich fest mit dem Schwenkteil 17 verbunden ist, so dass das Trennwerkzeug 14 in einem festen Winkel, insbesondere rechtwinkelig zu der Anlagefläche 16 und der Auflagefläche 15 orientiert ist. Eine bevorzugte Ausführungsform sieht jedoch vor, dass der Träger 21 über ein Schrägschwenklager 22 an dem Schwenkteil 17 um eine Schrägstellachse S2 schwenkbar gelagert ist, sodass auch schräge Schnitte in das Werkstück W einbringbar sind.

Das Schrägschwenklager 22 weist beispielsweise ein Lagerteil 23 auf, welches am Schwenkteil 21 angeordnet ist, insbesondere an einem Schwenkteil-Körper 19 des Schwenkteils 17, sowie ein Lagerteil 24 am Träger 21, die durch ein nicht dargestelltes Lagerachselement miteinander drehbar verbunden sind. Die Lagerteile 23, 24 sind relativ zueinander fixierbar, wobei von einer Fixiereinrichtung 25 lediglich ein Handgriff 26 dargestellt ist. Mithilfe des Handgriffs 26 ist der Träger 21 bezüglich der Schrägschwenkachse S2 an dem Schwenkteil 17 drehfest fixierbar. Dazu wird beispielsweise das in der Zeichnung nicht dargestellte Lagerachselement durch den Handgriff 26 entlang seiner Längsachse betätigt, um die Lagerteile 23, 24 gegeneinander zu verspannen, zu verrasten oder dergleichen. An dem Schrägschwenklager 22 kann auch ein Stellgetriebe zur Einstellung einer Schrägstellposition der Werkzeugaufnahme 13 relativ zur Auflagefläche 15 vorgesehen sein (nicht dargestellt), z.B. eine Stellgetriebe wie in DE 10 2006 059 751 A1 erläutert.

Die Werkzeugmaschine 10 kann zur Energieversorgung des Antriebsmotors 12 einen Anschluss für einen nicht dargestellten Energiespeicher, beispielsweise einen Akkupack und/oder - wie in der Zeichnung dargestellt - einen Netzanschluss 27, beispielsweise ein Netzkabel, zum Anschluss an ein elektrisches Energieversorgungsnetz, beispielsweise 110 V bis 240 V Wechselstrom, aufweisen.

Am Träger 21 könnte die Antriebsbaugruppe 11 unverschieblich gelagert sein. Vorliegend ist jedoch eine Linearführung 30 für die Antriebsbaugruppe 11 vorgesehen, welche Führungskörper 31, beispielsweise Führungsstäbe, aufweist, an denen ein Schlitten 32 entlang einer Längsachse L linear verschieblich gelagert ist. Der Schlitten 32 weist beispielsweise Führungsaufnahmen 33 auf, die von den Führungskörpern 31 durchdrungen sind. Somit kann die Antriebsbaugruppe 11 entlang der Längsachse L verstellt werden, so dass die Werkzeugmaschine 10 die Funktion einer Zugsäge realisiert. Eine Stellbewegung entlang der Längsachse L ist mit einem Pfeil SL in der Zeichnung angedeutet.

Zur Realisierung einer Kapp-Funktion ist die Werkzeugaufnahme 13, insbesondere die Antriebsbaugruppe 11 als Ganzes, anhand eines Kapp-Schwenklagers 35 um eine Kapp-Schwenkachse S3 an dem Schlitten 32 schwenkbar gelagert. Somit kann das Trennwerkzeug 14 um die Kapp-Schwenkachse S3 von der Auflagefläche 15 und somit vom Werkstück W weg oder zur Auflagefläche 15 und somit zum Werkstück W hin geschwenkt werden, was in der Zeichnung durch Pfeile K1, K2 angedeutet ist. Der Bediener greift dazu zweckmäßigerweise die Antriebsbaugruppe 11 an einem Handgriff 28, an dem vorzugsweise auch ein Antriebschalter 29 zum Einschalten und Ausschalten des Antriebsmotors 12 vorgesehen ist.

Die Antriebsbaugruppe taucht beim Schwenken zur Auflagefläche 15 hin zwischen den Führungskörpern 31 durch, wobei das Trennwerkzeug 14 in einen Schlitz 36 am Schwenkteil 17 eintauchen kann.

Wenn die Werkzeugmaschine 10 auf einem ebenen Untergrund abgestellt ist, verläuft die Schwenkachse S vertikal, während die Schwenkachsen S2 und S3 horizontal verlaufen. Die Schwenkachsen S, S2 und S3 sind zueinander rechtwinkelig.

Der Antriebsmotor 12 ist vorzugsweise in einem Motorgehäuse 37 aufgenommen. Für das Trennwerkzeug 14 weist die Antriebsbaugruppe 11 vorzugsweise eine obere Abdeckung 38 sowie eine verstellbare Abdeckung 39 auf, sodass in der Regel nur der in den Schlitz 36 eintauchende Abschnitt und der dem Träger 21 zugewandte Abschnitt des Trennwerkzeugs 14 frei ist.

Vor die Maschinenbasis 20 oder Schwenkbasis 18 stehen seitlich Fußteile 57 vor, deren Füße 58 zum Abstellen auf einem Untergrund vorgesehen sind. Die Fußteile 57 weisen zweckmäßigerweise Auflageflächen 59 auf, die in einer Ebene mit der Auflagefläche 15 des Schwenkteils 17 liegen. Die Fußteile 57 sind mit der Schwenkbasis 18 vorzugsweise fest verbunden, insbesondere einstückig mit derselben.

An den Fußteilen 57 sind Anlagekörper 44 gehalten, die die Anlagefläche 16 bereitstellen. Die beiden Anlagekörper 44 erstrecken sich bis zu den Flachseiten des Trennwerkzeugs 14, erstrecken sich also auch oberhalb der Auflagefläche 15 des Schwenkteils 17. Die Anlagekörper 44 sind beispielsweise plattenartig oder durch Platten gebildet.

Die Auflagefläche 15 kann durch seitlich an der Schwenkbasis 18 oder Maschinenbasis 20 angeordnete Stützausleger 40 vergrößert werden. Die Stützausleger 40 weisen beispielsweise Stützfüße 41 zum Abstellen auf einem Untergrund auf. Die Stützausleger 40 sind anhand von Führungselementen 42 bezüglich der Schwenkbasis 18 verschieblich gelagert. Vorzugsweise ist vorgesehen, dass die Stützausleger 40 von der Schwenkbasis 18 oder der Maschinenbasis 20 entfernbar sind. Die Stützausleger 40 weisen zweckmäßigerweise Auflageflächen 43 auf, die in einer Ebene mit der Auflagefläche 15 des Schwenkteils 17 liegen.

Vor einen beispielsweise etwa flach zylindrischen Schwenkteil-Grundkörper 45 des Schwenkteils 17 steht ein Betätigungsarm 46 nach radial außen vor. Der Betätigungsarm 46 weist zweckmäßigerweise eine mit der Auflagefläche 15, die am Schwenkteil-Grundkörper 45 vorgesehen ist, verbundene und in gleicher Ebene liegende Auflagefläche 47 auf. Der Schlitz 36 erstreckt sich von der Auflagefläche 15 in die Auflagefläche 47 hinein. Der Betätigungsarm 46 ist weiterhin mit einer Stütze 48 auf einem Untergrund abgestützt. Die Stütze 48 ist zweckmäßigerweise einstellbar und umfasst eine entsprechende Stellschraube 49.

Ein Bediener kann den Betätigungsarm 46 ergreifen, um das Schwenkteil 17 und somit die Antriebsbaugruppe 11 mit der Werkzeugaufnahme 13 um die Schwenkachse S schwenken, was durch Pfeile K2 und K3 angedeutet ist.

Eine Skala 34 an der Schwenkbasis 18 ermöglicht es, einen entsprechenden Stellwinkel oder Schwenkwinkel des Schwenkteils 17 relativ zur Schwenkbasis 18 abzulesen.

Das Schwenkteil 17 und somit die Antriebsbaugruppe 11 ist in verschiedenen Drehwinkelstellungen bezüglich der Schwenkachse S relativ zur Schwenkbasis 18 fixierbar, wozu beispielsweise eine Klemmeinrichtung 50 vorgesehen ist. Die Klemmeinrichtung 50 umfasst eine Klemm-Betätigungshandhabe 51, beispielsweise einen Drehknauf. Die Klemm-Betätigungshandhabe 51 steht beispielsweise vor einen freien Endbereich eines Armkörpers 52 des Betätigungsarms 46 vor, sodass ein Bediener die Klemm-Betätigungshandhabe 51 leicht ergreifen kann, um das Schwenkteil 17 bezüglich der Schwenkbasis 18 zu schwenken. Weiterhin kann der Bediener beispielsweise mit seiner Handinnenfläche die Klemm-Betätigungshandhabe 51 umgreifen und somit drehbetätigen, um die Klemmeinrichtung 50 zwischen einer das Schwenkteil 17 bezüglich der Schwenkbasis 18 klemmenden Klemmstellung und einer Freigabestellung zu verstellen, in der das Schwenkteil 17 bezüglich der Schwenkbasis 18 um die Schwenkachse S verstellt werden kann.

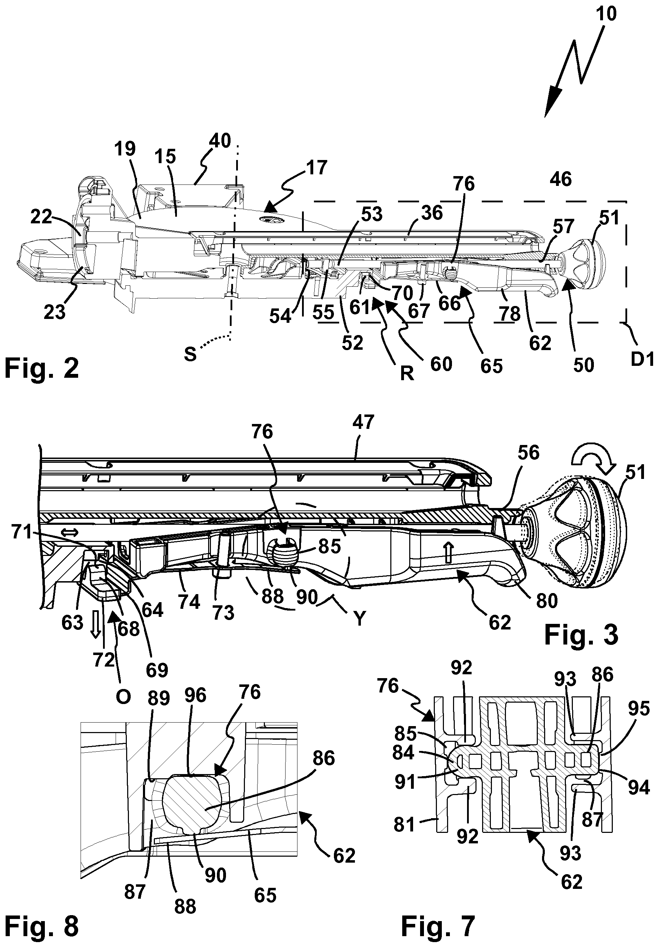

Beispielsweise steht ein stabförmiges Klemmelement 53, das sich in Längsrichtung des Betätigungsarms 46 erstreckt, mit einem freien Endbereich zu einer Klemmkontur 54 der Schwenkbasis 18 vor. Das Klemmelement 53 kann beispielsweise in ein bezüglich des Betätigungsarms 46 ortsfestes Gewinde, beispielsweise an einer Mutter 55, eingeschraubt und aus dem Gewinde ausgeschraubt werden (angedeutet durch einen Pfeil in Figur 3), wobei das Klemmelement 53 aus der Klemmstellung in Figur 3 gestrichelt dargestellt) in die Freigabestellung (in Figur 3 mit durchgezogenen Linien dargestellt) und umgekehrt entlang seiner Längsachse verstellt wird. In der Klemmstellung ist das freie Ende des Klemmelements 53, dessen Stirnseite, gegen die Klemmkontur 54 geklemmt oder gedrückt, in der Freigabestellung von der Klemmkontur 54 beabstandet. Das Klemmelement 53 ist im Bereich der Klemm-Betätigungshandhabe 51 in einem Lagerkörper 56 drehbar gelagert. Der Lagerkörper 56 hat eine beispielsweise zylindrische Gestalt. Der Lagerkörper 56 hat eine Lageraufnahme 57, die vom Klemmelement 53 durchdrungen ist.

Mit der Klemmeinrichtung 50 ist eine quasi stufenlose Drehwinkel-Einstellung des Schwenkteils 17 relativ zur Schwenkbasis 18 möglich. Für einen schnellen Arbeitsbetrieb, bei dem vorbestimmte Drehwinkelpositionen des Schwenkteils 17 bezüglich der Schwenkbasis 18 bzw. vorbestimmte Drehwinkelpositionen des Trennwerkzeugs 14/der Werkzeugaufnahme 13 relativ zur Anlagefläche 16 einzustellen sind, erweist sich die nachfolgend erläuterte Rasteinrichtung 60 schnell und effektiv.

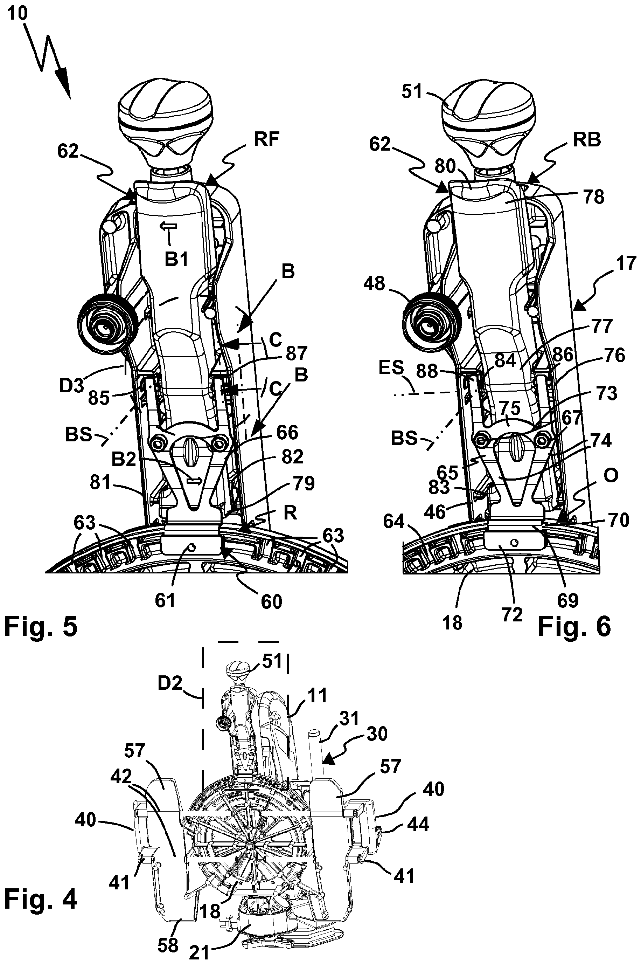

Die Rasteinrichtung 60 umfasst ein Rastelement 61, welches anhand eines Betätigungselements 62 außer Eingriff mit Rastgegenkonturen 63 an der Schwenkbasis 18 gebracht werden kann und dann eine Lösestellung O (Figuren 2, 4,5) einnimmt oder in Eingriff mit einer der Rastgegenkonturen 63 ist, sodass das Schwenkteil 17 bezüglich der Schwenkbasis 18 verrastet und drehfest fixiert ist. Diese Stellung des Rastelements 61 ist eine Raststellung R, die in den Figuren 3 und 6 dargestellt ist.

Die Rastgegenkonturen 63 erstrecken sich bogenförmig um die Schwenkachse S. Die Rastgegenkonturen 63 umfassen beispielsweise Rastvertiefungen 64. Die Rastgegenkonturen 63 sind an einer Unterseite der Schwenkbasis 18, also an einer Unterseite der Maschinenbasis 20 vorgesehen. Die Rastgegenkonturen 63 sind abseits und getrennt von der Klemmkontur 54 vorgesehen, so dass sich Verrastung und Verklemmung nicht gegenseitig beeinflussen oder beeinträchtigen.

Das Rastelement 61 ist durch eine Federanordnung 65 in die Raststellung R belastet.

Die Federanordnung 65 umfasst beispielsweise ein Federelement 66. Das Federelement 66 ist beispielsweise etwa blattförmig. Das Federelement 66 ist am Betätigungsarm ortsfest festgelegt, beispielsweise anhand einer Verschraubung mittels Schrauben 67 an den Armkörper 52 angeschraubt. Selbstverständlich wäre auch eine andersartige Befestigung, beispielsweise Verklemmung, Verklebung oder dergleichen andere Befestigung der Federanordnung 65 an dem Betätigungsarm 46 ohne weiteres möglich.

Das Rastelement 61 umfasst beispielsweise einen Rastvorsprung 68, welcher an einem Endbereich 69 der Federanordnung 65 vorgesehen ist. Der Endbereich 69 umfasst beispielsweise eine Stufe 70, vor die der Rastvorsprung 68 in Richtung der Rastgegenkonturen 69 vorsteht. An dem Rastvorsprung 68 sind vorzugsweise Schrägflächen 71 vorgesehen, sodass dieser leichter in die Rastgegenkonturen 63 hineingleiten kann. Das Rastelement 61 umfasst beispielsweise einen Rastkörper 72, insbesondere in der Art einer Kunststoffkappe oder eines Kunststoffkörpers. Die Federanordnung 65, insbesondere das Federelement 66, besteht vorzugsweise aus einem Federstahl oder sonstigen federnd nachgiebigen Metall. Der Rastkörper 72 ist mit dem Endbereich 69 der Federanordnung 65 beispielsweise verklebt, verschraubt oder anderweitig fest verbunden.

Der Endbereich 69 der Federanordnung 65 ist in der Art einer Federzunge ausgestaltet. Beispielsweise erstrecken sich zwischen dem Endbereich 69 und einem Befestigungsabschnitt 73 der Federanordnung 65, der von den Schrauben 67 durchdrungen ist, Arme 74. Die Arme 74 haben im Bereich der Schrauben 67 einen größeren Abstand als beim Rastelement 61 oder dem Endbereich 69, laufen also zum Endbereich 69 aufeinander zu. Am Befestigungsabschnitt 73 sind die beiden Arme 74 durch einen Verbindungsabschnitt 75 miteinander verbunden. Das Betätigungselement 62 ist anhand eines Betätigungselement-Lagers 76 um eine Entrast-Schwenkachse ES , also um einen Rast-Bewegungsfreiheitsgrad, bezüglich des Betätigungsarms 46 und somit des Schwenkteils 17 schwenkbar gelagert, um das Rastelement 61 aus der Raststellung R in die Lösestellung O zu verstellen. Zudem kann das Betätigungselement 62 quer zur Entrast-Schwenkachse ES und somit um einen Blockier-Bewegungsfreiheitsgrad um eine Blockier-Schwenkachse BS an dem Betätigungselement-Lager 76 in eine Rastblockierstellung RB verschwenkt werden, um das Rastelement 61 in der Lösestellung O zu blockieren, d.h. gegenüber einer Verrastung mit einer der Rastgegenkonturen 63 zu blockieren. In einer Rastfreigabestellung RF hingegen kann das Betätigungselement 62 bezüglich der Entrast-Schwenkachse ES frei schwenken, wobei das Rastelement 61 aus der Lösestellung O in die Raststellung R verstellbar ist.

Das Betätigungselement 62 ist als ein Betätigungshebel ausgestaltet, welcher mit seinem Lagerabschnitt 77 am Betätigungselement-Lager 76 schwenkbar um die Schwenkachsen ES und BS gelagert ist. Ein Griffabschnitt 78 am einen Endbereich des Betätigungselements 62 ist nahe bei der Klemm-Betätigungshandhabe 51 angeordnet, ist also vom Bediener mit einer Hand zu ergreifen, beispielsweise mit seinen Fingern derjenigen Hand, die sich an der Klemm-Betätigungshandhabe 51 mit der Handinnenfläche abstützt. Ferner ist ein Widerlagervorsprung 80 am Griffabschnitt 78 vorgesehen, sodass eine Art Griffmulde gebildet ist. Der Widerlagervorsprung 80 steht seitlich vor den Griffabschnitt 78 vor, sodass der Bediener eine Zugkraft in schräger Richtung zur Klemm-Betätigungshandhabe 51 auf das Betätigungselement 62 ausüben kann. Dies unterstützt insbesondere das Lösen der Rasteinrichtung 80, das heißt die Verstellung des Betätigungselements 62 aus der Raststellung R in die Lösestellung O.

Am anderen Endbereich des Betätigungselements 62 ist ein Betätigungsabschnitt 79 zum Betätigen des Rastelements 61 vorgesehen.

Der Betätigungshebel oder das Betätigungselement 62 ist durch die Federanordnung 65 an dem Betätigungsarm 46 gehalten. Das Betätigungselement 62 ist sandwichartig zwischen einem Armkörper 81 des Betätigungsarms 46 und andererseits die Federanordnung 65 angeordnet. Beispielsweise verläuft der Betätigungshebel oder das Betätigungselement 62 zwischen den Schrauben 67.

Der Betätigungsabschnitt 79 stützt sich an dem Endbereich 69 des Federelement 66 ab. Durch ein Schwenken des Betätigungselements 62 um die Entrast-Schwenkachse ES kann der Betätigungsabschnitt 79 den Endbereich 69 mit dem Rastelement 61 von den Rastgegenkonturen 63 weg verstellen, also die Lösestellung O einstellen. Dabei wird der Griffabschnitt 78 zu der Klemm-Betätigungshandhabe 51 hin geschwenkt. Eine derartige Bedienung ist ergonomisch äußerst bequem.

Die Federanordnung 65 wirkt zudem als eine Rückstellfeder, die das Betätigungselement 62 aus der Lösestellung O in Richtung der Raststellung R zurückverstellt, da deren Endbereich 69 auf den Betätigungsabschnitt 79 des Betätigungselements 62 wirkt.

In der Lösestellung O sind beliebige Drehwinkelstellungen des Schwenkteils 17 bezüglich der Schwenkbasis 18 einstellbar. Anhand der Klemmeinrichtung 50 können diese Drehwinkelstellungen jeweils fixiert werden. Zur Einstellung beliebiger Drehwinkelpositionen des Schwenkteils 17 bezüglich der Schwenkbasis 18 kann der Bediener an sich das Betätigungselement 62 in einem das Rastelement 61 in der Lösestellung O haltenden Position festhalten. Diese Bedienung ist jedoch nicht in allen Fällen bequem. Vorteilhaft kann daher das Betätigungselement 62 in die Rastblockierstellung RB verstellt werden, bei dem es das Rastelement 61 in der Lösestellung O ohne Krafteinwirkung des Bedieners hält.

In der Rastblockierstellung RB, die durch Verstellung des Betätigungselements 62 um die Blockier-Schwenkachse BS in Richtung von Pfeilen B1, B2, die in Figur 5 exemplarisch eingezeichnet sind, erreichbar ist, ist der Betätigungsabschnitt 79 des Betätigungselements 62 an einer Stützkontur 82 des Betätigungsarms 46 abgestützt. Vorzugsweise ist die Stützkontur 82 fest mit dem Armkörper 81 verbunden, beispielsweise integral von diesem gebildet.

An dieser Stelle sei erwähnt, dass der Armkörper 81 zweckmäßigerweise als ein Gussteil ausgebildet ist, so dass er zweckmäßigerweise entsprechende Verrippungen aufweisen kann, die ihn verstärken. Auch die Schwenkbasis 18 und/oder das Schwenkteil 17 und/oder der Träger 21 sind vorzugsweise als Gussteile ausgeführt und/oder weisen vorteilhaft Verstärkungskonturen, Rippen oder dergleichen auf, die man in der Zeichnung zumindest teilweise sieht (zum Beispiel in Figur 4). Die Schwenkbasis 18 und/oder das Schwenkteil 17 und/oder der Träger 21 bestehen zweckmäßigerweise ganz oder teilweise aus Metall, insbesondere aus Aluminium und/oder Magnesium oder dergleichen. Selbstverständlich ist auch eine Herstellung ganz oder teilweise aus Kunststoff möglich. Insbesondere ist das Betätigungselement 62 vorzugsweise aus Kunststoff, was es besonders leicht macht. Das Betätigungselement 62 könnte aber auch ganz oder teilweise aus Metall bestehen. Die vorgenannten Maßnahmen gelten selbstverständlich bei jeder erfindungsgemäßen Werkzeugmaschine als vorteilhaft, nicht nur bei der Werkzeugmaschine 10.

Neben der Stützkontur 82 ist eine Vertiefung 83 vorgesehen, in welcher der Betätigungsabschnitt 79 des Betätigungselements 62 in der Rastfreigabestellung RF aufgenommen ist. Die Vertiefung 83 ermöglicht zwar ein gewisses Bewegungsspiel des Betätigungselements 62 um die Blockier-Schwenkachse BS, jedoch keine Verstellung in die Rastblockierstellung RB.

Auch das Lagerkonzept des Betätigungselement-Lagers 76 wirkt in einem Sinne, dass das Betätigungselement 62 vorrangig um die Entrast-Schwenkachse ES und nachrangig um die Blockier-Schwenkachse BS schwenkbar ist. Von Betätigungselement 62 stehen Achselemente 84, 86 vor, die in Lageraufnahmen 85, 87 des Betätigungselement-Lagers 76 aufgenommen sind.

Die Achselemente 84, 86 erstrecken sich etwa entlang der Entrast-Schwenkachse ES und/oder quer zur Längserstreckung des Betätigungselements 62.

Anhand der Federanordnung 65 sind die Achselemente 86, 84 in den Lageraufnahmen 85, 87 nicht nur um eine Achse drehbar, beispielsweise die Entrast-Schwenkachse ES, sondern mit einem gewissen Bewegungsspiel quer zu einer derartigen einzigen Achse gehalten. Die Achselemente 84, 86 sind durch Federarme 88 des Federelements 66 in den Lageraufnahmen 85, 87 gehalten. Die Federarme 88 stützen sich an Rippen 90 oder sonstigen schmaleren Stützvorsprüngen der Achselemente 86, 84 ab.

Das Achselement 84 ist in der Lageraufnahme 85 um die Blockier-Schwenkachse BS schwenkbar aufgenommen. Dazu ist beispielsweise ein Kopfbereich 91 des Achselements 84 rund, so dass es sich am Boden der Lageraufnahme 85 drehen kann. Weiterhin hat das Achselement 84 eine ballige oder kugelige Gestalt, sodass es sich in der Lageraufnahme 85 um die Entrast-Schwenkachse ES und die Blockier-Schwenkachse BS drehen kann. Die Blockier-Schwenkachse BS verläuft also durch die Lageraufnahme 85 hindurch.

Ein Abstand zwischen Seitenschenkeln 92 der Lageraufnahme 85 für das Achselement 84 ist so schmal bemessen, dass dieses in der Lageraufnahme 85 zwar um die Blockier-Schwenkachse BS schwenken kann, jedoch kein oder fast kein Bewegungsspiel im Sinne einer Linearbewegung oder Schiebebewegung in der Lageraufnahme 85 aufweist, sondern ausschließlich Dreh-Bewegungsspiel oder im Wesentlichen nur ein Dreh-Bewegungsspiel.

Das Achselement 86 hingegen ist in seiner Lageraufnahme 87 mit einem Schiebe-Bewegungsspiel aufgenommen. Ein Abstand zwischen Seitenschenkeln 93 der Lageraufnahme 87 ist entsprechend breiter, sodass das Achselement 86 um die Blockier-Schwenkachse BS des anderen Schwenklagers schwenken kann, welches durch das Achselement 84 und die Lageraufnahme 85 gebildet ist.

Es ist vorteilhaft vorgesehen, dass ein Kopfbereich 94 des Achselements 86 sich an einer Stützfläche 95 am Boden der Lageraufnahme 87 abstützen kann. Die Stützfläche 95 stützt das Betätigungselement 62 in einem Sinne ab, dass das Achselement 84 in der Lageraufnahme 85 gehalten wird.

Eine vorteilhafte Maßnahme sieht vor, dass in der Lageraufnahme 87 eine Lagervertiefung 96 vorgesehen ist, in welcher das Achselement 86 zu einem Schwenken um die Entrast-Schwenkachse ES aufgenommen ist. Neben der Lageraufnahme 87 ist eine Stützkontur 89 vorgesehen, in der das Achselement 86 in der Rastblockierstellung RB abgestützt ist.

Der das Achselement 86 belastende Federarm 88 hält das Achselement 86 bei der üblichen Rast-Entrast-Funktion des Betätigungselements 62 in der Lagervertiefung 96. Zur Einnahme der Rastblockierstellung RB muss also das Betätigungselement 62 entgegen der Kraft des das Achselement 86 belastenden Federarms 88 aus der Lagervertiefung 96 herausbewegt und auf die Stützkontur 89 verlagert werden. Somit wird sichergestellt, dass das Betätigungselement 62 vorrangig um die Entrast-Schwenkachse ES schwenkt und nicht sozusagen versehentlich die Beweglichkeit um die Blockier-Schwenkachse BS erreicht. Zudem können die beiden Stützkonturen 82, 89 einen Halt des Betätigungselements 62 in der Rastblockierstellung RB gemeinsam realisieren.

## Patentansprüche

1. Werkzeugmaschine (10), insbesondere Säge oder Kappsäge, zur trennenden Bearbeitung eines Werkstücks (W) mit einer Antriebsbaugruppe (11), welche einen Antriebsmotor (12) und eine durch den Antriebsmotor (12) antreibbare Werkzeugaufnahme (13) für ein Trennwerkzeug (14) aufweist, mit einer Schwenkbasis (18), an der ein Schwenkteil (17) um eine Schwenkachse (S) zur Veränderung einer Relativposition der Werkzeugaufnahme (13) für das Trennwerkzeug (14) und einer zum Anlegen eines Werkstücks vorgesehenen Anlagefläche (16) schwenkbar gelagert ist, und mit einer Rasteinrichtung (60), die ein durch eine Federanordnung (65) in eine Raststellung (R) belastetes Rastelement (61), welches in einer Raststellung (R) mit mindestens einer Rastgegenkontur (63) in Eingriff ist und das Schwenkteil (17) relativ zur Schwenkbasis (18) drehfest festlegt und in einer Lösestellung (O) außer Eingriff mit der mindestens einen Rastgegenkontur (63) ist und ein Verschwenken des Schwenkteils (17) relativ zur Schwenkbasis (18) freigibt, und ein manuell betätigbares, mit einem Rast-Bewegungsfreiheitsgrad an einem Betätigungselement-Lager (76) beweglich gelagertes Betätigungselement (62) zur Betätigung des Rastelements (61) aus der Raststellung (R) in die Lösestellung (O) aufweist, wobei das Betätigungselement (62) mit einem von dem Rast-Bewegungsfreiheitsgrad verschiedenen Blockier-Bewegungsfreiheitsgrad an dem Betätigungselement-Lager (76) zwischen einer Rastfreigabestellung (RF), in der das Rastelement (61) zu einer Verstellung in die Raststellung (R) freigegeben ist, und einer Rastblockierstellung (RB) beweglich gelagert ist, in der das Rastelement (61) gegenüber einer Verstellung in die Raststellung (R) blockiert ist, wobei der Rast-Bewegungsfreiheitsgrad eine Schwenkbarkeit des Betätigungselements (62) um eine eine Entrast-Schwenkachse (ES) bildende Schwenkachse umfasst oder dadurch gebildet ist, **dadurch gekennzeichnet, dass** der Blockier-Bewegungsfreiheitsgrad eine Schwenkbarkeit des Betätigungselements (62) um eine zu der Entrast-Schwenkachse (ES) des Rast-Bewegungsfreiheitsgrads winkelige Blockier-Schwenkachse (BS) umfasst oder dadurch gebildet ist.

2. Werkzeugmaschine (10) nach Anspruch 1, **dadurch gekennzeichnet, dass** der Rast-Bewegungsfreiheitsgrad eine Verschieblichkeit des Betätigungselements (62) um eine insbesondere von einer Schiebeachse des Rast-Bewegungsfreiheitsgrads verschiedene Blockier-Schiebeachse umfasst oder dadurch gebildet ist.

3. Werkzeugmaschine nach Anspruch 1 oder 2, **dadurch gekennzeichnet, dass** das Betätigungselement (62) und/oder das Rastelement (61) in der Rastblockierstellung (RB) an mindestens einer Stützkontur (82, 89), insbesondere einem Stützvorsprung oder einer Stufe, abgestützt ist und/oder dass das Betätigungselement (62) das Rastelement (61) in der Rastblockierstellung (RB) hält.

4. Werkzeugmaschine nach Anspruch 3, **dadurch gekennzeichnet, dass** die mindestens eine Stützkontur (82, 89) eine Stützkontur (89) an dem Betätigungselement-Lager (76), insbesondere neben einer Lagervertiefung (96) und/oder eine Stützkontur (82) unmittelbar an dem Rastelement (61) und/oder eine Stützkontur (82) an einem freien Endbereich der Federanordnung (65) für das Rastelement (61) umfasst oder dadurch gebildet ist.

5. Werkzeugmaschine nach einem der vorhergehenden Ansprüche, **dadurch gekennzeichnet, dass** das Betätigungselement (62), insbesondere anhand einer Aufnahmekontur an dem Betätigungselement-Lager (76) und/oder anhand einer Federanordnung (65), insbesondere die Federanordnung (65) des Rastelements (61), in eine vordem Blockier-Bewegungsfreiheitsgrad vorrangige Beweglichkeit mit dem Rast-Bewegungsfreiheitsgrad belastet und/oder verrastet ist.

6. Werkzeugmaschine nach einem der vorhergehenden Ansprüche, **dadurch gekennzeichnet, dass** das Betätigungselement-Lager (76) mindestens eine Lageraufnahme (85, 87) aufweist, in welchem ein Achselement (84, 86) zu einer Schwenkbarkeit des Betätigungselements (62) um eine Entrast-Schwenkachse (ES) schwenkbar gelagert ist, wobei das Achselement (84, 86) zur Bereitstellung des Blockier-Bewegungsfreiheitsgrads aus der Lageraufnahme (85, 87), insbesondere durch eine Schwenkbewegung, herausbewegbar ist.

7. Werkzeugmaschine nach Anspruch 6, **dadurch gekennzeichnet, dass** das Betätigungselement (62) durch eine Federanordnung (65), insbesondere die Federanordnung (65) des Rastelements (61), in die mindestens eine Lageraufnahme (85, 87) hinein belastet ist und/oder dass das Betätigungselement (62) an einander entgegengesetzten Seiten mit einer Paarung aus Lageraufnahme (85, 87) und Achselement (84, 86) des Betätigungselement-Lagers (76) um die Entrast-Schwenkachse (ES) schwenkbar gelagert ist, wobei vorteilhaft das Achselement (86) nur einer Paarung aus Lageraufnahme (87) und Achselement (86) aus seiner Lageraufnahme (87) herausbewegbar ist und/oder eine Paarung aus Lageraufnahme (85) und Achselement (84) ein Schwenklager für ein Schwenken des Betätigungselements (62) um eine Blockier-Schwenkachse (BS) des Blockier-Bewegungsfreiheitsgrads bildet.

8. Werkzeugmaschine (10) nach einem der vorhergehenden Ansprüche, **dadurch gekennzeichnet, dass** das Betätigungselement (62) ein Betätigungshebel oder ein Betätigungsschieber ist oder aufweist und/oder dass das Betätigungselement (62) eine stabförmige oder stangenartige Gestalt aufweist und/oder dass das Betätigungselement (62) an einem von der Schwenkbasis (18) und/oder von dem Schwenkteil (17) abstehenden, insbesondere einen Schlitz für das Trennwerkzeug (14) aufweisenden, Arm (46) angeordnet ist.

9. Werkzeugmaschine nach einem der vorhergehenden Ansprüche, **dadurch gekennzeichnet, dass** die Federanordnung (65) das Rastelement (61) integral aufweist oder bildet und/oder dass die Federanordnung (65) das Betätigungselement (62) zu dem Betätigungselement-Lager (76) hin belastet und/oder einen Federkörper oder ein Federelement (66) aufweist, an dessen einem Endbereich das Rastelement (61) angeordnet oder ausgebildet ist und an dessen anderem Endbereich mindestens ein Federarm vorgesehen ist, welcher das Betätigungselement (62) zu dem Betätigungselement-Lager (76) hin belastet.

10. Werkzeugmaschine nach einem der vorhergehenden Ansprüche, **dadurch gekennzeichnet, dass** das Betätigungselement (62) neben oder unterhalb einer Klemm-Betätigungshandhabe (51), insbesondere einem Handknauf, einer Klemmeinrichtung (50) zum Verklemmen des Schwenkteils (17) relativ zur Schwenkbasis (18) angeordnet ist, wobei die Klemm-Betätigungshandhabe (51) und das Betätigungselement (62) zweckmäßigerweise mit einer Hand bedienbar sind.

11. Werkzeugmaschine nach einem der vorhergehenden Ansprüche, **dadurch gekennzeichnet, dass** die mindestens eine Rastgegenkontur (63) an der Schwenkbasis (18) und das Rastelement (61) und/oder das Betätigungselement (62) an dem Schwenkteil (17) angeordnet sind.

12. Werkzeugmaschine nach einem der vorhergehenden Ansprüche, **dadurch gekennzeichnet, dass** die mindestens eine Rastgegenkontur (63) einen Bestandteil einer Anordnung mehrerer, bogenförmig um die Schwenkachse (S) des Schwenkteils (17) bezüglich der Schwenkbasis (18) angeordneter Rastgegenkonturen (63) für das Rastelement (61) bildet.

13. Werkzeugmaschine nach einem der vorhergehenden Ansprüche, **dadurch gekennzeichnet, dass** die Schwenkbasis (18) als eine auf einem Untergrund abstellbare Maschinenbasis ausgestaltet ist, auf der oder an der das Schwenkteil (17) schwenkbar gelagert ist, und/oder dass das Schwenkteil (17) und/oder die Schwenkbasis (18) eine Auflagefläche (15) und/oder Anlagefläche (16) für das Werkstück und/oder eine Tragbasis für die Antriebsbaugruppe (11) bereitstellt.

14. Werkzeugmaschine nach einem der vorhergehenden Ansprüche, **dadurch gekennzeichnet, dass** die Antriebsbaugruppe (11) bezüglich der Schwenkbasis (18) an einer Linearführung (30) zur Durchführung von Längsschnitten mit dem Trennwerkzeug (14) linear gelagert ist und/oder um eine Schrägschwenkachse (S3) rechtwinkelig quer zu der Schwenkachse (S) des Schwenkteils (17) bezüglich der Schwenkbasis (18) schwenkbar gelagert ist und/oder anhand eines Kapp-Schwenklagers (35) zu einer Werkstück-Auflagefläche (15) hin und von dieser weg schwenkbar gelagert ist.

## Claims

1. Machine tool (10), in particular saw or mitre saw, for the separative machining of a workpiece (W), with a drive assembly (11) having a drive motor (12) and a tool holder (13) drivable by the drive motor (12) for a cutting tool (14), with a swivel base (18), on which a swivel part (17) is mounted pivotably about a pivot axis (S) for changing a relative position of the tool holder (13) for the cutting tool (14) and a contact surface (16) for placing a workpiece, and with a latching device (60), which has a latching element (61), which is loaded towards a latching position (R) by a spring assembly (65) and which in a latching position (R) is in engagement with at least one mating latching contour (63) and non-rotatably locates the swivel part (17) relative to the swivel base (18) and in a release position (O) is out of engagement with the at least one mating latching contour (63) and enables a pivoting of the swivel part (17) relative to the swivel base (18), and a manually operated actuating element (62) movably mounted on an actuating element bearing (76) with a degree of latching freedom of movement for actuating the latching element (61) from the latching position (R) into the release position (O), wherein the actuating element (62) is movably mounted on the actuating element bearing (76) with a degree of blocking freedom of movement different from the degree of latching freedom of movement between a latching release position (RF), in which the latching element (61) is enabled to move into the latching position (R), and a latching blocking position (RB), in which the latching element (61) is blocked against a movement into the latching position (R), wherein the degree of latching freedom of movement comprises or is represented by a pivotability of the actuating element (62) about a pivot axis forming an unlatching pivot axis (ES), **characterised in that** the degree of blocking freedom of movement comprises or is represented by a pivotability of the actuating element (62) about a blocking pivot axis (BS) oriented at an angle to the unlatching pivot axis (ES) of the degree of latching freedom of movement.

2. Machine tool (10) according to claim 1, **characterised in that** the degree of latching freedom of movement comprises or is represented by a movability of the actuating element (62) about a blocking sliding axis that is in particular different from a sliding axis of the degree of latching freedom of movement.

3. Machine tool according to claim 1 or 2, **characterised in that** the actuating element (62) and/or the latching element (61) are/is in the latching blocking position (RB) supported on at least one supporting contour (82, 89), in particular on a supporting projection or a step, and/or **in that** the actuating element (62) holds the latching element (61) in the latching blocking position (RB).

4. Machine tool according to claim 3, **characterised in that** the at least one supporting contour (82, 89) comprises or is represented by a supporting contour (89) at the actuating element bearing (76), in particular adjacent to a bearing recess (96), and/or a supporting contour (82) directly at the latching element (61) and/or a supporting contour (82) in a free end region of the spring assembly (65) for the latching element (61).

5. Machine tool according to any of the preceding claims, **characterised in that** the actuating element (62) is loaded or latched towards a movability with the degree of latching freedom of movement that has priority over the degree of blocking freedom of movement, in particular by means of a reception contour at the actuating element bearing (76) and/or by means of a spring assembly (65), in particular the spring assembly (65) of the latching element (61).

6. Machine tool according to any of the preceding claims, **characterised in that** the actuating element bearing (76) has at least one bearing receptacle (85, 87), in which an axis element (84, 86) is pivotably mounted for a pivotability of the actuating element (62) about an unlatching pivot axis (ES), wherein the axis element (84, 86) can be moved out of the bearing receptacle (85, 87), in particular by a pivoting movement, to provide the degree of blocking freedom of movement.

7. Machine tool according to claim 6, **characterised in that** the actuating element (62) is loaded into the at least one bearing receptacle (85, 87) by a spring assembly (65), in particular the spring assembly (65) of the latching element (61), and/or **in that** the actuating element (62) is pivotably mounted about the unlatching pivot axis (ES) on opposite sides with a pairing of bearing receptacle (85, 87) and axis element (84, 86) of the actuating element bearing (76), wherein the axis element (86) of only one pairing of bearing receptacle (87) and axis element (86) can advantageously be moved out of its bearing receptacle (87) and/or a pairing of bearing receptacle (85) and axis element (84) forms a pivot bearing for pivoting the actuating element (62) about a blocking pivot axis (BS) of the degree of blocking freedom of movement.

8. Machine tool according to any of the preceding claims, **characterised in that** the actuating element (62) is or has an actuating lever or an actuating slide, and/or **in that** the actuating element (62) has a rod or bar shape, and/or **in that** the actuating element (62) is located at an arm (46) protruding from the swivel base (18) and/or from the swivel part (17) and in particular having a slot for the cutting tool (14).

9. Machine tool according to any of the preceding claims, **characterised in that** the spring assembly (65) is integrated with or forms the latching element (61), and/or **in that** the spring assembly (65) loads the actuating element (62) towards the actuating element bearing (76) and/or has a spring body or a spring element (66), in one end region of which the latching element (61) is located or formed and in the other end region of which at least one spring arm is provided to load the actuating element (62) towards the actuating element bearing (76).

10. Machine tool according to any of the preceding claims, **characterised in that** the actuating element (62) is located adjacent to or below a clamping operating handle (51), in particular a knob, of a clamping device (50) for clamping the swivel part (17) relative to the swivel base (18), wherein the clamping operating handle (51) and the actuating element (62) can expediently be operated with one hand.

11. Machine tool according to any of the preceding claims, **characterised in that** the at least one mating latching contour (63) is located at the swivel base (18) and the latching element (61) and/or the actuating element (62) are/is located at the swivel part (17).

12. Machine tool according to any of the preceding claims, **characterised in that** the at least one mating latching contour (63) forms a part of an arrangement of several mating latching contour (63) for the latching element (61) arranged in a bow shape about the pivot axis (S) of the swivel part (17) with respect to the swivel base (18).

13. Machine tool according to any of the preceding claims, **characterised in that** the swivel base (18) is designed as a machine base which can be placed on a ground and on which the swivel part (17) is pivotably mounted, and/or **in that** the swivel part (17) and/or the swivel base (18) have/has a locating surface (15) and/or a contact surface (16) for the workpiece and/or a support base for the drive assembly (11).

14. Machine tool according to any of the preceding claims, **characterised in that** the drive assembly (11) is mounted in a linear fashion with respect to the pivot base (18) at a linear guide (30) for longitudinal cuts with the cutting tool (14) and/or mounted pivotably about an oblique pivot axis (S3) at right angles to the pivot axis (S) of the swivel part (17) with respect to the pivot base (18) and/or mounted for pivoting towards a workpiece locating surface (15) and away therefrom by means of a mitre pivot bearing (35).

## Revendications

1. Machine-outil (10), en particulier scie ou scie oscillatoire, pour usiner par découpage une pièce (W),
avec un module d'entraînement (11), lequel présente un moteur d'entraînement (12) et un logement d'outil (13), pouvant être entraîné par le moteur d'entraînement (12), pour un outil de découpage (14), avec une base de pivotement (18), sur laquelle une partie pivotante (17) est montée de manière à pouvoir pivoter autour d'un axe de pivotement (S) pour modifier une position relative du logement d'outil (13) pour l'outil de découpage (14) et une surface d'appui (16) prévue pour poser une pièce, et avec un dispositif d'enclenchement (60), qui présente un élément d'enclenchement (61) soumis à une contrainte par un ensemble de ressort (65) dans une position d'enclenchement (R), lequel est en prise dans une position d'enclenchement (R) avec au moins un contre-contour d'enclenchement (63) et immobilise de manière solidaire en rotation la partie pivotante (17) par rapport à la base de pivotement (18) et est hors prise, dans une position de desserrage (O), d'avec l'au moins un contre-contour d'enclenchement (63) et libère un pivotement de la partie pivotante (17) par rapport à la base de pivotement (18), et un élément d'actionnement (62) pouvant être actionné manuellement, monté de manière mobile avec un degré de liberté de mouvement d'enclenchement sur un palier d'élément d'enclenchement (76), pour actionner l'élément d'enclenchement (61) hors de la position d'enclenchement (R) dans la position de desserrage (O), dans lequel l'élément d'actionnement (62) est monté avec un degré de liberté de mouvement de blocage différent du degré de liberté de mouvement d'enclenchement sur le palier d'élément d'actionnement (76) entre une position de libération d'enclenchement (RF), dans laquelle l'élément d'enclenchement (61) est libéré pour un ajustement dans la position d'enclenchement (R), et une position de blocage d'enclenchement (RB), dans laquelle l'élément d'enclenchement (61) est bloqué par rapport à un ajustement dans la position d'enclenchement (R), dans lequel le degré de liberté de mouvement d'enclenchement comprend une capacité de pivotement de l'élément d'actionnement (62) autour d'un axe de pivotement formant un axe de pivotement de désenclenchement (ES) ou est formé par celle-ci, **caractérisée en ce que** le degré de liberté de mouvement de blocage comprend une capacité de pivotement de l'élément d'actionnement (62) autour d'un axe de pivotement de blocage (BS) angulaire par rapport à l'axe de pivotement de désenclenchement (ES) du degré de liberté de mouvement d'enclenchement ou est formé par celle-ci.

2. Machine-outil (10) selon la revendication 1, **caractérisée en ce que** le degré de liberté de mouvement d'enclenchement comprend une possibilité de coulissement de l'élément d'actionnement (62) autour d'un axe de glissement de blocage différent en particulier d'un axe de glissement du degré de liberté de mouvement d'enclenchement ou est formé par celle-ci.

3. Machine-outil selon la revendication 1 ou 2, **caractérisée en ce que** l'élément d'actionnement (62) et/ou l'élément d'enclenchement (61) prennent appui dans la position de blocage par enclenchement (RB) sur au moins un contour d'appui (82, 89), en particulier une partie faisant saillie d'appui ou un palier, et/ou que l'élément d'actionnement (62) maintient l'élément d'enclenchement (61) dans la position de blocage d'enclenchement (RB).

4. Machine-outil selon la revendication 3, **caractérisée en ce que** l'au moins un contour d'appui (82, 89) comprend un contour d'appui (89) sur le palier d'élément d'actionnement (76), en particulier à côté d'un renfoncement de palier (96) et/ou un contour d'appui (82) directement sur l'élément d'enclenchement (61) et/ou un contour d'appui (82) sur une zone d'extrémité libre de l'ensemble de ressort (65) pour l'élément d'enclenchement (61) ou est formé par celui-ci.

5. Machine-outil selon l'une quelconque des revendications précédentes, **caractérisée en ce que** l'élément d'actionnement (62) est contraint et/ou est enclenché avec le degré de liberté de mouvement d'enclenchement dans une mobilité prioritaire avant le degré de liberté de mouvement de blocage, en particulier à l'aide d'un contour de logement sur le palier d'élément d'actionnement (76) et/ou à l'aide d'un ensemble de ressort (65), en particulier l'ensemble de ressort (65) de l'élément d'enclenchement (61).

6. Machine-outil selon l'une quelconque des revendications précédentes, **caractérisée en ce que** le palier d'élément d'actionnement (76) présente au moins un logement de palier (85, 87), dans lequel un élément d'axe (84, 86) est monté de manière à pouvoir pivoter pour une possibilité de pivotement de l'élément d'actionnement (62) autour d'un axe de pivotement de désenclenchement (ES), dans lequel l'élément d'axe (84, 86) peut être déplacé hors du logement de palier (85, 87), en particulier par un déplacement par pivotement pour fournir le degré de liberté de mouvement de blocage.

7. Machine-outil selon la revendication 6, **caractérisée en ce que** l'élément d'actionnement (62) est contraint par un ensemble de ressort (65), en particulier l'ensemble de ressort (65) de l'élément d'enclenchement (61), à l'intérieur de l'au moins un logement de palier (85, 87), et/ou que l'élément d'actionnement (62) est monté de manière à pouvoir pivoter sur des côtés opposés les uns aux autres par une paire composée du logement de palier (85, 87) et de l'élément d'axe (84, 86) du palier d'élément d'actionnement (76) autour de l'axe de pivotement de désenclenchement (ES), dans laquelle de manière avantageuse l'élément d'axe (86) de seulement une paire composée du logement de palier (87) et de l'élément d'axe (86) peut être déplacé hors de son logement de palier (87) et/ou une paire composée d'un logement de palier (85) et de l'élément d'axe (84) forme un palier de pivotement pour un pivotement de l'élément d'actionnement (62) autour d'un axe de pivotement de blocage (BS) du degré de liberté de mouvement de blocage.

8. Machine-outil (10) selon l'une quelconque des revendications précédentes, **caractérisée en ce que** l'élément d'actionnement (62) est ou présente un levier d'actionnement ou un coulisseau d'actionnement, et/ou que l'élément d'actionnement (62) présente une forme en forme de barre ou de type tige, et/ou que l'élément d'actionnement (62) est disposé sur un bras (46) dépassant de la base de pivotement (18) et/ou de la partie pivotante (17), en particulier présentant une entaille pour l'outil de découpage (14).

9. Machine-outil selon l'une quelconque des revendications précédentes, **caractérisée en ce que** l'ensemble de ressort (65) présente ou forme intégralement l'élément d'enclenchement (61), et/ou que l'ensemble de ressort (65) contraint l'élément d'actionnement (62) en direction du palier d'élément d'actionnement (76) et/ou présente un corps de ressort ou un élément de ressort (66), sur une zone d'extrémité duquel est disposé ou réalisé l'élément d'enclenchement (61) et sur l'autre zone d'extrémité duquel est prévu au moins un bras de ressort, lequel contraint l'élément d'actionnement (62) en direction du palier d'élément d'actionnement (76).

10. Machine-outil selon l'une quelconque des revendications précédentes, **caractérisée en ce que** l'élément d'actionnement (62) est disposé à côté ou en dessous d'une poignée d'actionnement de serrage (51), en particulier d'un pommeau, d'un dispositif de serrage (50) pour coincer la partie pivotante (17) par rapport à la base de pivotement (18), dans laquelle la poignée d'actionnement de serrage (51) et l'élément d'actionnement (62) peuvent être utilisés de manière opportune avec une main.

11. Machine-outil selon l'une quelconque des revendications précédentes, **caractérisée en ce que** l'au moins un contre-contour d'enclenchement (63) est disposé sur la base de pivotement (18) et l'élément d'enclenchement (61) et/ou l'élément d'actionnement (62) sont disposés sur la partie pivotante (17).

12. Machine-outil selon l'une quelconque des revendications précédentes, **caractérisée en ce que** l'au moins un contre-contour d'enclenchement (63) forme une partie constitutive d'un ensemble de plusieurs contre-contours d'enclenchement (63), disposés en forme d'arc autour de l'axe de pivotement (S) de la partie pivotante 17) par rapport à la base de pivotement (18), pour l'élément d'enclenchement (61).

13. Machine-outil selon l'une quelconque des revendications précédentes, **caractérisée en ce que** la base de pivotement (18) est configurée en tant qu'une base de machine pouvant être déposée sur un sol, sur laquelle la partie pivotante (17) est montée de manière à pouvoir pivoter, et/ou que la partie pivotante (17) et/ou la base de pivotement (18) fournissent une surface de réception (15) et/ou une surface d'appui (16) pour la pièce et/ou une base de support pour le module d'entraînement (11).

14. Machine-outil selon l'une quelconque des revendications précédentes, **caractérisée en ce que** le module d'entraînement (11) est monté de manière linéaire par rapport à la base de pivotement (18) sur un guidage linéaire (30) pour exécuter des coupes longitudinales avec l'outil de découpage (14) et/ou est monté de manière à pouvoir pivoter autour d'un axe de pivotement oblique (S3) à angle droit de manière transversale par rapport à l'axe de pivotement (S) de la partie pivotante (17) par rapport à la base de pivotement (18) et/ou est monté de manière à pouvoir pivoter à l'aide d'un palier de pivotement oscillant (35) en direction d'une surface d'appui de pièce (15) et de manière à s'en éloigner.
